# EUROPEAN PATENT APPLICATION

(11) **EP 4 641 330 A1**
(43) Date of publication of application: **29.10.2025**
(21) Application number: 25168787.7
(22) Date of filing: 07.04.2025
(51) Int. Cl.: G05B 19/418, F24F 11/64

(54) **METHOD OF REALIZING BENEFITS OF INDOOR CLEANING SYSTEM THROUGH ARTIFICIAL INTELLIGENCE GENERATED CONTENT**

(30) Priority: 22.04.2024 TW 113114967
(71) Applicant: Microjet Technology Co., Ltd., Hsinchu (TW)
(72) Inventor: Mou, Hao-Jan, Hsinchu (TW); Wu, Chin-Chuan, Hsinchu (TW); Huang, Chi-Feng, Hsinchu (TW)
(74) Representative: Uexküll & Stolberg

(57) **Abstract**

A method of realizing benefits of indoor cleaning system (A) through AIGC is disclosed and includes following steps: providing professionally generated data of an indoor cleaning system (A); providing user-generated data of the indoor cleaning system (A); providing an AIGC model (4) and inputting the professionally generated data and the user-generated data for calculating, comparing and identifying to generate an automatically generated data; and providing an integrated benefit correction to promote an ultimate integration of the automatically generated data generated by the AIGC model (4), so as to optimize a deep learning processing data correction, and compare learning and improvement of the automatically generated data, wherein the AIGC model (4) is led to quickly converge in a correct and applicable direction, and the automatically generated data are regressed to a most accurate one, so that the benefits of the indoor cleaning system (A) are optimized for implementing the indoor cleaning system (A).

## Description

### FIELD OF THE INVENTION

The present disclosure relates to an indoor air cleaning system, and more particularly to a method of realizing benefits of an indoor cleaning system by combining the indoor cleaning system with artificial intelligence generated content (AIGC), so as to detect, locate, circulate and filter air pollution in an indoor field to meet a clean room requirement of ZAPClean room level.

### BACKGROUND OF THE INVENTION

In recent years, modern people are placing increasing importance on the quality of the air in their surroundings. For example, carbon monoxide, carbon dioxide, volatile organic compounds (VOC), PM2.5, nitric oxide, sulfur monoxide and even the suspended particles contained in the air are exposed in the environment to affect the human health, and even endanger the life seriously. The quality of environmental air has attracted the attention of various countries. At present, how to detect the air quality to avoid and stay away from areas with poor gas quality is a current topic of concern. However, it is difficult to have the surveillance and control the indoor air quality. Besides the outdoor air quality, the indoor air-conditioning conditions and the pollution sources are the major factors affecting the indoor air quality. It is necessary to intelligently and quickly detect indoor air pollution sources in various indoor fields, effectively remove the indoor air pollution to form a clean and safe breathing gas state, and monitor indoor air quality in real time anytime, anywhere. Therefore, an indoor cleaning system is proposed, which is set up in the indoor field to detect, locate, circulate and filter the air pollution. The entire system is equipped with gas sensors and intelligent cloud to form an intelligent linkage system. The control instructions are transmitted through communication to control the processing operation of the air purification device to filter air pollution, so that the air pollution status of the indoor field can meet the clean room requirement of ZAPClean room level.

In addition, how to implement the indoor cleaning system in the indoor field, optimize the number of clean devices, arrange the specification layout, optimize the performance control, implement the noise reduction control, and minimize the setting cost planning, all of which require huge amounts of data to verify and repeatedly experiment to calculate the optimal planning settings, so that such a system can be applied very well in general indoor home life. This is the main subject of the present disclosure.

### SUMMARY OF THE INVENTION

One object of the present disclosure is to provide a method of realizing benefits of an indoor cleaning system through artificial intelligence generated content (AIGC). By combining an indoor cleaning system that can be implemented in indoor home life with the artificial intelligence generated content (AIGC) module to realize the benefits of the indoor cleaning system, it allows to optimize the number of clean devices, arrange the specification layout, optimize the performance control, implement the noise reduction control, and minimize the setting cost planning for the indoor cleaning system, so that the indoor cleaning system can be applied and disposed to detect, locate, circulate and filter air pollution in the indoor field to meet a clean room requirement of ZAPClean room level.

In accordance with an aspect of the present disclosure, a method of realizing benefits of an indoor cleaning system through artificial intelligence generated content (AIGC) is provided, and the method includes steps of: providing professionally generated data of the indoor cleaning system, wherein the professionally generated data includes outdoor and indoor air pollution data of buildings, indoor field data of buildings, clean room grade data, air cleaning system hardware specifications and air cleaning system software specifications; providing user-generated data of the indoor cleaning system, wherein the user-generated data includes indoor field parameter data of user's building, indoor field experimental measurement air pollution parameter data of user's building, and indoor field HVAC air exchange rate parameter data of user's building; providing an artificial intelligence generated content (AIGC) model and inputting the professionally generated data and the user-generated data for calculating, comparing and identifying to generate an automatically generated data, wherein the automatically generated data includes an optimized number of air cleaning hardware, an optimized performance control of air cleaning hardware, an optimized noise reduction of air cleaning hardware, a minimum one-time setup cost information of the air cleaning system, and a minimum operating cost information of the air cleaning system; and providing an integrated benefit correction to promote an ultimate integration of the automatically generated data generated by the AIGC model, so as to optimize a deep learning processing data correction, and compare learning and improvement of the automatically generated data, wherein the AIGC model is led to quickly converge in a correct and applicable direction, and the automatically generated data is regressed to a most accurate one, so that the benefits of the indoor cleaning system are optimized for implementing the indoor cleaning system.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic diagram illustrating a method of realizing benefits of an indoor clean system through generative artificial intelligence (AIGC) according to an embodiment of the present disclosure;
FIG. 2 is a schematic diagram illustrating the components of the indoor air cleaning system according to the embodiment of the present disclosure; and
FIG. 3 is a comparison table of cleanliness levels for the indoor air cleaning system of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

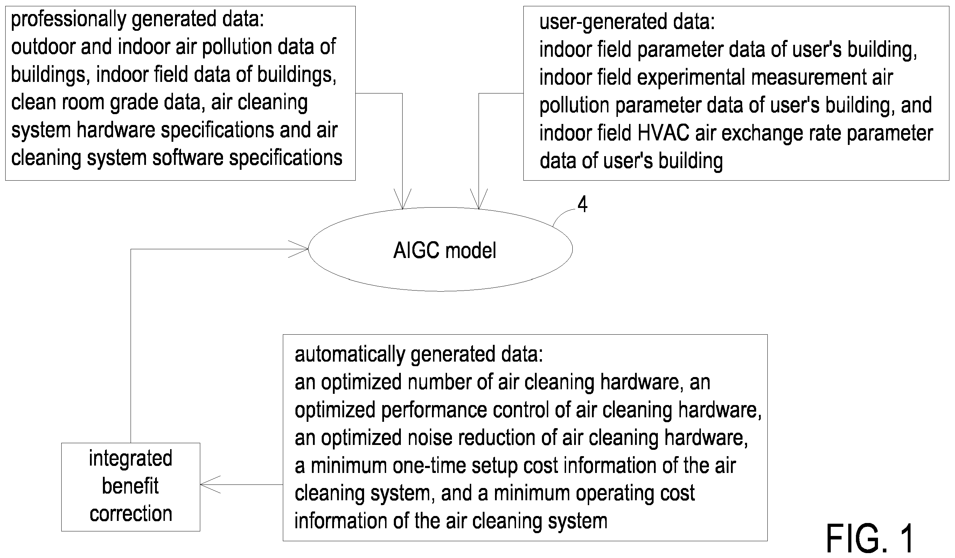

Please refer to FIG. 1. The present disclosure provides a method of realizing benefits of an indoor cleaning system through artificial intelligence generated content (AIGC). In the embodiment, professionally generated data of the indoor cleaning system are provided. Preferably but not exclusively, the professionally generated data includes outdoor and indoor air pollution data of buildings, indoor field data of buildings, clean room grade data, air cleaning system hardware specifications and air cleaning system software specifications. Furthermore, user-generated data of the indoor cleaning system are provided. Preferably but not exclusively, the user-generated data includes indoor field parameter data of user's building, indoor field experimental measurement air pollution parameter data of user's building, and indoor field HVAC air exchange rate parameter data of user's building. Notably, in the embodiment, an artificial intelligence generated content (AIGC) model 4 is provided, and the professionally generated data and the user-generated data are inputted thereinto for calculating, comparing and identifying to generate an automatically generated data. Preferably but not exclusively, the automatically generated data includes an optimized number of air cleaning hardware, an optimized performance control of air cleaning hardware, an optimized noise reduction of air cleaning hardware, a minimum one-time setup cost information of the air cleaning system, and a minimum operating cost information of the air cleaning system. In the embodiment, an integrated benefit correction for the AIGC model 4 is provided to promote an ultimate integration of the automatically generated data generated by the AIGC model 4, so as to optimize a deep learning processing data correction, and compare learning and improvement of the automatically generated data, wherein the AIGC model 4 is led to quickly converge in a correct and applicable direction, and the automatically generated data are regressed to a most accurate one, so that the benefits of the indoor cleaning system are optimized for implementing the indoor cleaning system.

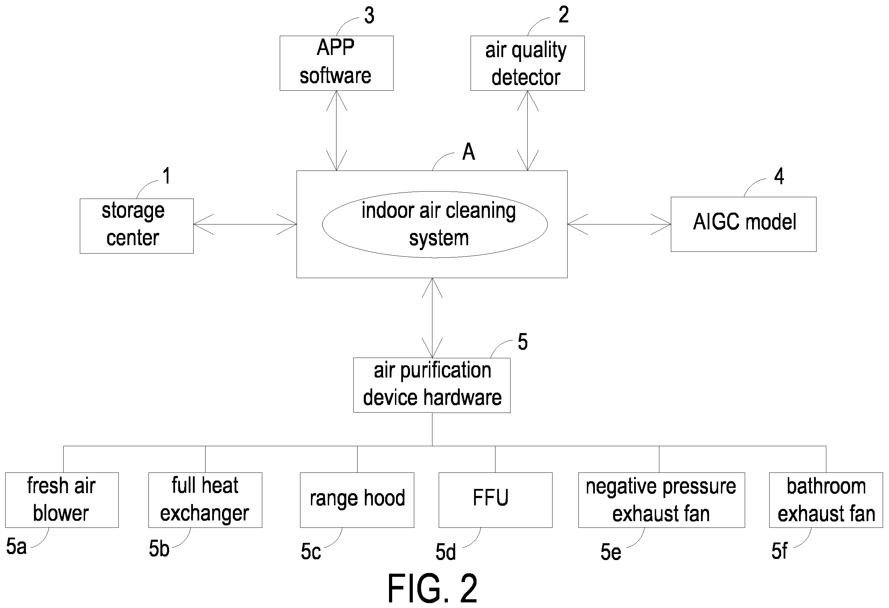

As shown in FIG. 2, the above-mentioned indoor air cleaning system A includes a storage center 1, an air quality detector 2, an application program (APP) software 3, the artificial intelligence generated content (AIGC) model 4 and an air purification device hardware 5.

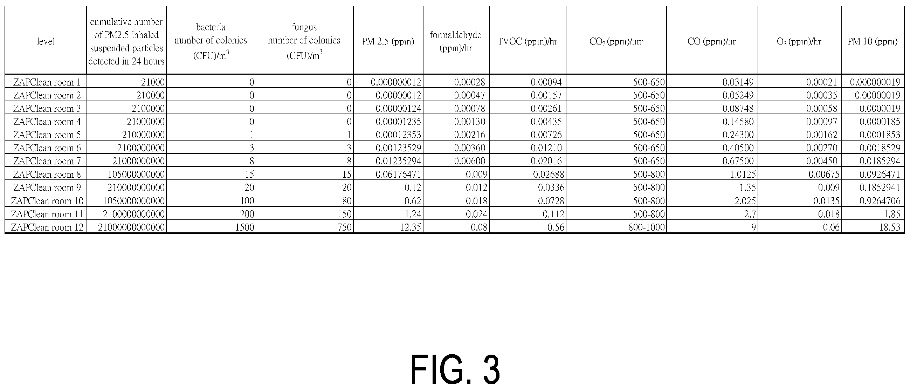

In the embodiment, the storage center 1 collects and stores indoor cleaning system information data to form a big data database of the professionally generated data and the user-generated data. Notably, the indoor cleaning system information data refer to the application reference data of spatial parameters, data parameters for detecting air pollution, reference safety value parameters, clean room grade comparison parameters, software and hardware specifications of purification devices, and control parameters for the system to be implemented in an environment field, but is not limited thereto. Preferably but not exclusively, the indoor cleaning system information data further includes all system-related application data of research data and historical data for generative AI machine learning model. Preferably but not exclusively, in the embodiment, the professionally generated data includes the outdoor and indoor air pollution specification data of the building (e.g., air pollution properties, concentration safety values, etc.), the indoor field space data of the building (e.g., size and proportions, use functions, environmental ventilation, temperature control comfort parameters of the building), the clean room grade specification data (e.g., ZAPClean room level 1~12 grade comparison table, as shown in FIG. 3), and the required software and hardware specifications of the air cleaning system (e.g., clean air output CADR of fan and filter specifications.). Preferably but not exclusively, in the embodiment, the user-generated data includes the indoor field air pollution data of the user's building (e.g., the real-time detection data of the air quality detector 2), the indoor field experimental measurement air pollution data of the user's building (e.g., the actual air pollution data of the user's indoor field detected by the inspection unit), and the indoor field HVAC air exchange rate parameter data of the user's building (e.g., the indoor and outdoor carbon dioxide comparison data are instantly detected by the air quality detector 2 in the user's environment.)

In the embodiment, the air quality detector 2 detects air pollution in the outdoor field and the indoor field of the building to output air pollution data, and transmits the air pollution data to the storage center 1 through the Internet of Things to form the user-generated data.

In the embodiment, the relevant indoor cleaning system information is inputted through the application program (APP) software 3 and transmitted to the storage center 1 for storage through the Internet of Things.

Preferably but not exclusively, in the embodiment, the artificial intelligence generated content (AIGC) model 4 includes one selected from the group consisting of OpenAI API artificial intelligence model, Azure artificial intelligence model, Gemini artificial intelligence model, AWS artificial intelligence model, IBM Watson artificial intelligence model and a combination thereof. The storage center 1 stores the professionally generated data and the user-generated data collected by the artificial intelligence generated content (AIGC) model 4 through the Internet of Things, and the data are processed and analyzed by the artificial intelligence generated content (AIGC) model 4 through deep learning to generate the automatically generated data, as shown in FIG. 1. That is to say, the application program (APP) software 3 inputs the relevant indoor cleaning system information, such as the professionally generated data and the user-generated data. Preferably but not exclusively, the professionally generated data includes the outdoor and indoor air pollution specification data of the building, the indoor field space data of the building, the clean room grade specification data, the required software and hardware specifications of the air cleaning system and other information. Preferably but not exclusively, the user-generated data includes the indoor field air pollution data of the user's building, the indoor field experimental measurement air pollution data of the user's building, the indoor field HVAC air exchange rate data of the user's building and other information. The above data are stored in the storage center 1 to form the big data database of air pollution data. Through the application program (APP) software 3, the user inputs system requirement information about the number of cleaning devices, the specification layout, the performance control, the noise reduction control implementation, and the minimum setup cost planning. The artificial intelligence generated content (AIGC) model 4 can collect the indoor cleaning system information data stored in the storage center 1 through the Internet of Things to form the professionally generated data and the user-generated data in basic generation. The artificial intelligence generated content (AIGC) model 4 further produces deep learning processes and analyzes the data to generate real and generated trained discriminators, which are compared with each other to obtain the automatically generated data, such as the optimized number of air cleaning hardware, the optimized performance control of air cleaning hardware, the optimized noise reduction of air cleaning hardware, the minimum one-time setup cost information of the air cleaning system, and the minimum operating cost information of the air cleaning system.

The artificial intelligence generated content (AIGC) model 4 further includes an autoregressive correction analysis mechanism, and the integrated benefit correction is provided for the artificial intelligence generated content (AIGC) model 4 integrated benefit correction.

The ultimate integration of the automatically generated data generated by the artificial intelligence generated content (AIGC) model 4 is promoted, to predict and generate new and real deep learning processing data, so as to optimize the deep learning processing data correction Compare the authenticity of the automatically generated data, the artificial intelligence generated content (AIGC) model 4 is led to quickly converge in the "correct" and applicable direction, and the automatically generated data are regressed to a most accurate one. In this way, before the implementation of the indoor air cleaning system, the optimal pre-operation layout and the application optimization benefits are obtained through the artificial intelligence generated content (AIGC) platform. Consequently, the indoor cleaning system that truly meets the required design specifications and costs is obtained, and can be further applied and disposed to detect, locate, circulate and filter air pollution in the indoor field.

In the embodiment, the air purification device hardware 5 is installed in the indoor field of the building. Preferably but not exclusively, the air purification device hardware 5 is one selected from the group consisting of a fresh air blower 5a, a full heat exchanger 5b, a range hood 5c, a fan filter unit (FFU) 5d, a negative pressure exhaust fan 5e, a bathroom exhaust fan 5f, a mobile circulation filter device and a central control device (computer). Each air purification device hardware 5 includes at least one fan and at least one filter element. In that, the air purification device hardware 5 connected the storage center 1 through the Internet of Things can intelligently select and issue a control command based on the automatically generated data generated, so that the fan operation of the air purification device hardware 5 is regulated, and the air pollution in the indoor area is guided and circulated to filter through the filter element. Consequently, the air pollution status in the indoor area can meet the clean room requirements of ZAPClean room level 1~12.

In summary, the present disclosure provides a method of realizing benefits of an indoor cleaning system by combining the indoor cleaning system that can be implemented in indoor home life with the artificial intelligence generated content (AIGC) model. It allows to optimize the number of clean devices, arrange the specification layout, optimize the performance control, implement the noise reduction control, and minimize the setting cost planning for the indoor cleaning system. In this way, before the implementation of the indoor cleaning system, the optimal pre-operation layout and the application optimization benefits are obtained through the artificial intelligence generated content (AIGC) platform. Consequently, the indoor cleaning system that truly meets the required design specifications and costs is obtained, can be further applied and disposed to detect, locate, circulate and filter air pollution in the indoor field to meet a clean room requirement of ZAPClean room level. The present disclosure includes the industrial applicability and the inventive steps.

## Claims

1. A method of realizing benefits of an indoor cleaning system (A) through artificial intelligence generated content (AIGC), **characterized by** comprising steps of:
providing professionally generated data of the indoor cleaning system (A), wherein the professionally generated data comprises outdoor and indoor air pollution data of buildings, indoor field data of buildings, clean room grade data, air cleaning system hardware specifications and air cleaning system software specifications;
providing user-generated data of the indoor cleaning system (A), wherein the user-generated data comprises indoor field parameter data of user's building, indoor field experimental measurement air pollution parameter data of user's building, and indoor field HVAC air exchange rate parameter data of user's building;
providing an artificial intelligence generated content (AIGC) model (4) and inputting the professionally generated data and the user-generated data for calculating, comparing and identifying to generate an automatically generated data, wherein the automatically generated data comprises an optimized number of air cleaning hardware, an optimized performance control of air cleaning hardware, an optimized noise reduction of air cleaning hardware, a minimum one-time setup cost information of the air cleaning system, and a minimum operating cost information of the air cleaning system; and
providing an integrated benefit correction to promote an ultimate integration of the automatically generated data generated by the AIGC model (4), so as to optimize a deep learning processing data correction, and compare learning and improvement of the automatically generated data, wherein the AIGC model (4) is led to quickly converge in a correct and applicable direction, and the automatically generated data are regressed to a most accurate one, so that the benefits of the indoor cleaning system (A) are optimized for implementing the indoor cleaning system (A).

2. The method of realizing the benefits of the indoor cleaning system (A) through AIGC according to claim 1, wherein the artificial intelligence generated content (AIGC) model (4) includes one selected from the group consisting of OpenAI API artificial intelligence model, Azure artificial intelligence model, Gemini artificial intelligence model, AWS artificial intelligence model, IBM Watson artificial intelligence model and a combination thereof.

3. The method of realizing the benefits of the indoor cleaning system (A) through AIGC according to claim 1, wherein the indoor cleaning system comprises an air purification device hardware (5), and the air purification device hardware has specifications selected from the group consisting of air quality detector specifications, fresh air blower (5a) specifications, full heat exchanger (5b) specifications, range hood (5c) specifications, fan filter unit (FFU) (5d) specifications, mobile circulation filter device specifications, bathroom exhaust fan (5f) specifications, central control device (computer) specifications, negative pressure exhaust fan (5e) specifications, filter element specifications and a combination thereof.

4. The method of realizing the benefits of the indoor cleaning system (A) through AIGC according to claim 3, wherein the professional generated data includes clean room grade standard data, and the clean room grade standard data includes a cleanliness of ZAPClean Room level 1~12.
